# EUROPÄISCHE PATENTSCHRIFT

(11) **EP 2 936 451 B1**
(45) Veröffentlichungstag und Bekanntmachung des Hinweises auf die Patenterteilung: **29.08.2018**
(21) Anmeldenummer: 13801987.2
(22) Anmeldetag: 30.11.2013
(51) Int. Cl.: G07C 9/00, B60R 25/24

(54) **FUNKSCHLÜSSEL FÜR EIN FAHRZEUG**
RADIO KEY FOR A VEHICLE
CLÉ ÉLECTRONIQUE POUR UN VÉHICULE

(30) Priorität: 19.12.2012 DE 102012024872
(43) Veröffentlichungstag der Anmeldung: 28.10.2015
(73) Patentinhaber: Audi AG, 85045 Ingolstadt (DE)
(72) Erfinder: EDERLE, Thomas, 74177 Bad Friedrichshall (DE)
(74) Vertreter: Brandt, Kai
(86) Internationale Anmeldenummer: PCT/EP2013/003614
(87) Internationale Veröffentlichungsnummer: WO 2014/094971

(56) Entgegenhaltungen:
- EP-A2- 1 000 825
- EP-A2- 2 264 672
- WO-A1-02/051676
- WO-A2-2011/158236
- US-A1- 2006 061 458
- US-A1- 2008 147 268
- US-A1- 2011 264 304

## Beschreibung

Die Erfindung betrifft einen Funkschlüssel zum Authentifizieren eines Benutzers eines Fahrzeugs gegenüber einem Türentriegelungssystem des Fahrzeugs und/oder einer Antriebsstarteinrichtung des Fahrzeugs. Funkschlüssel dieser Art sind im Stand der Technik beispielsweise unter der Bezeichnung "Keyless go" ® bekannt.

Ein Funkschlüssel ist beispielsweise aus der DE 10 2008 037 018 A1 bekannt. Die bekannten Systeme ermöglichen es einem Benutzer eines Kraftfahrzeugs, beispielsweise eines Personenkraftwagens, eine Entriegelung der Türen des Fahrzeugs zu veranlassen, ohne hierbei einen Schlüssel in ein Schloss des Fahrzeugs stecken zu müssen, um beispielsweise die Zentralverriegelung für das Entriegeln der Türen zu aktivieren. Stattdessen wird die Gegenwart des Benutzers außerhalb des Fahrzeugs funktechnisch erkannt und das Türentriegelungssystem schon dann aktiviert, wenn der Benutzer beispielsweise einen Türhebel einer Fahrzeugtür auch nur betätigt. Genauso kann auch das Aktivieren einer Antriebsstarteinrichtung des Fahrzeugs ohne einen Zündschlüssel erfolgen, den der Benutzer in ein Zündschloss des Fahrzeugs stecken müsste. Hierzu kann die Gegenwart des Benutzers im Innenraum des Fahrzeugs erkannt werden und in Abhängigkeit davon die Antriebsstarteinrichtung freigegeben werden. Der Benutzer muss dann lediglich beispielsweise einen Start-/Stopptaster der Antriebsstarteinrichtung betätigen, um den Motor des Fahrzeugs zu starten,

Damit nicht eine beliebige Person die Fahrzeugtüren entriegeln kann bzw. den Motor des Fahrzeugs starten kann, ist ein Authentifizierungsmechanismus nötig. Hierzu muss der Nutzer des Fahrzeugs einen Funkschlüssel bei sich tragen, der ihn eindeutig durch einen Authentifizierungscode identifiziert. Die Ortung des Benutzers außerhalb des Fahrzeugs erfolgt dann eigentlich dadurch, dass die Gegenwart des Fahrers, sondern des Funkschlüssels funktechnisch erkannt wird und von dem Funkschlüssel der Authentifizierungscode an das Fahrzeug gesendet wird. Genauso erfolgt im Fahrzeuginnenraum eine Ortung des Funkschlüssels, um sicherzustellen, dass sich eine berechtigte Person ans Steuer des Fahrzeugs gesetzt hat.

Wesentliche Merkmale eines solchen Funkschlüssels sind zum einen eine Transpondereinheit, welche dazu ausgelegt ist, ein von dem Fahrzeug drahtlos ausgesendetes Anfragesignal zu empfangen und in Abhängigkeit von dem empfangenen Anfragesignal ein Authentifizierungssignal auf der Grundlage des Authentifizierungscodes auszusenden. Die Transpondereinheit ist zum anderen zu ihrem Schutz in einem Gehäuse angeordnet. Üblicherweise weist dieses Gehäuse die Form eines Schlüsselgriffes auf, wie sie auch für Zündschlüssel gängig sind. Oftmals ist in dem Gehäuse auch ein Schlüssel für ein Türschloss des Fahrzeugs integriert, um bei Ausfall der Transpondereinheit noch einen Zugang zum Fahrzeug zu ermöglichen.

Ein Funkschlüssel muss vom Benutzer eines Fahrzeugs also stets mitgeführt werden, damit er Zugang zum Fahrzeug erlangen kann. Da der Benutzer allerdings für den Zugang zum Fahrzeug den Funkschlüssel nicht aktiv bedienen muss, gerät es bei vielen Benutzern schnell in Vergessenheit, dass sie den Funkschlüssel bei sich führen müssen und ihn deshalb beispielsweise beim Verlassen ihres Wohnhauses in eine Tasche eines Kleidungsstücks stecken müssen. Erst wenn ein Benutzer vor dem Fahrzeug steht und vergeblich an einem Türgriff seines Fahrzeugs rüttelt, wird ihm bewusst, dass er noch einmal in das Wohnhaus laufen und den Funkschlüssel holen muss.

In dem Dokument US 2006/0061458 A1 ist ein Funkschlüssel für ein Kraftfahrzeug beschrieben, der als SD-Speicherkarte in ein Mobiltelefon eingesteckt werden kann. Der Benutzer kann an dem Mobiltelefon einen Befehl auswählen, der an den Funkschlüssel übertragen wird und von dort mittels eines Transponders des Funkschlüssels an das Kraftfahrzeug ausgesendet wird.

In dem Dokument EP 2 264 672 A2 ist ein Funkschlüssel beschrieben, der als Basisfunktion das Aufschließen einer Zentralverriegelung eines Kraftfahrzeugs bereitstellt und als Zusatzfunktion auch den Start des Kraftfahrzeugs ermöglicht. Die Zusatzfunktion ist nur verfügbar, wenn eine SIM-Karte mit zusätzlichen Identifikationsdaten in den Funkschlüssel eingesteckt ist. Um sicherzustellen, dass die richtige SIM-Karte im Funkschlüssel steckt, ist eine bidirektionale Kommunikation vorgesehen, mittels welcher überprüft wird, ob Identifikationskarten des Funkschlüssels und der SIM-Karte zueinander korrespondieren.

In dem Dokument WO 02/051676 A1 ist eine SIM-Karte mit einem Datenfeld zum Authentifizieren gegenüber einem Kraftfahrzeug beschrieben.

In dem Dokument US 2011/0264304 A1 ist ein Funkschlüssel beschrieben, der als Kreditkarte oder USB-Speicher ausgestaltet sein kann und mittels eines Computers konfiguriert werden kann. Hierdurch lässt sich der Funkschlüssel für unterschiedliche Fahrzeuge freischalten.

Der Erfindung liegt die Aufgabe zugrunde, die Verwendung eines Funkschlüssels komfortabler zu machen.

Die Aufgabe wird durch einen Funkschlüssel gemäß Patentanspruch 1 gelöst. Vorteilhafte Weiterbildungen der Erfindung sind durch die Unteransprüche gegeben.

Der erfindungsgemäße Funkschlüssel unterscheidet sich von dem aus dem Stand der Technik bekannten Funkschlüssel darin, dass die Transpondereinheit in einem Gehäuse angeordnet ist, das eine ganz bestimmte Form aufweist. Bei dem erfindungsgemäßen Funkschlüssel ist die Transpondereinheit in einem Gehäuse angeordnet, bei dem ein Bereich des Gehäuses eine Form eines Einsteckbereichs einer standardisierten Speicherkarte für ein mobiles Endgerät aufweist, also z.B. einer Micro-SD-Karte. Mit Einsteckbereich ist derjenige Bereich der Speicherkarte gemeint, über welchen die Speicherkarte standardgemäß in einem Einsteckschacht des mobilen Endgeräts zu befestigen ist. Üblicherweise handelt es sich um einen Bereich mit einer Aussparung, in die ein im Einsteckschacht angeordneter Riegel zum Halten eine Speicherkarte eingreift. Mit anderen Worten lässt sich also auch das Gehäuse des erfindungsgemäßen Funkschlüssels in einem Einsteckschacht für eine Speicherkarte eines mobilen Endgeräts stecken und dort befestigen.

Der erfindungsgemäße Funkschlüssel weist den Vorteil auf, dass der Benutzer eines Fahrzeugs nun den Funkschlüssel in seinem mobilen Endgerät befestigen und so mit sich herumtragen kann. Unter einem mobilen Endgerät ist hierbei im Zusammenhang mit der Erfindung ein Smartphone gemeint.
Die Erfindung beruht auf der Erkenntnis, dass die meisten Benutzer eines Fahrzeugs, das mit einem Funkschlüssel zu bedienen ist, immer auch ein mobiles Endgerät, also ein Smartphone, mit sich führen. Da die Benutzer in der Regel stets daran denken, telefonisch erreichbar zu sein oder beispielsweise ihre Termine auch unterwegs verwalten zu können, ist es sehr viel unwahrscheinlicher, dass ein Benutzer sein mobiles Endgerät vergisst. Zudem achtet ein Benutzer in der Regel auf sein mobiles Endgerät genauso sehr wie auf einen Funkschlüssel, da er das mobile Endgerät aufgrund von dessen Wert ebenfalls nicht verlieren möchte. Deshalb ist die Gefahr eines Verlierens des erfindungsgemäßen Funkschlüssels nicht größer als bei einem herkömmlichen Funkschlüssel.

Ein besonderer Schutz gegen eine Manipulation des erfindungsgemäßen Funkschlüssels durch beispielsweise ein Schadprogramm, das auf dem mobilen Endgerät ausgeführt wird und das z.B. versucht, den Authentifizierungscode zu kopieren, ergibt sich, indem die Transpondereinheit dazu ausgelegt ist, einen drahtgebundenen Kommunikation mit dem mobilen Endgerät nur unidirektional zur Transpondereinheit hin durchzuführen. Bei dem erfindungsgemäßen Funkschlüssel ist es somit nicht möglich, von einem mobilen Endgerät aus, in welchem der Funkschlüssel steckt, den Authentifizierungscode auszulesen. Die Transpondereinheit ist also autark in dem Gehäuse verschaltet. Unter der Transpondereinheit ist im Zusammenhang mit der Erfindung dabei das System aus der Empfängerelektronik für das Anfragesignal, der Senderelektronik für das Authentifizierungssignal und der Berechtigungselektronik zu verstehen, wobei die Berechtigungselektronik einen Prozessor zum Verarbeiten des Anfragesignals und zum Erzeugen des Authentifizierungssignals und ein Speicherelement für den Authentifizierungscode umfasst.

Ein weiterer Vorteil ergibt sich, indem der erfindungsgemäßen Funkschlüssel eine Kommunikationsschnittstelle gemäß einem Standard für eine Kommunikationsschnittstelle für die Speicherkarte aufweist. Solche Kommunikationsschnittstellen für Speicherkarten, also für die SD-Speicherkarten, sind dazu ausgelegt, einen Austausch von Daten zwischen der Speicherkarte und dem mobilen Endgerät zu ermöglichen. Durch Integrieren einer solchen Kommunikationsschnittstelle in den erfindungsgemäßen ergibt sich der Vorteil, dass auch Daten zwischen dem Funkschlüssel und dem mobilen Endgerät ausgetauscht werden können. Der erfindungsgemäße Funkschlüssel weist eine Steuereinrichtung auf, welche dazu ausgelegt ist, über die Kommunikationsschnittstelle von dem mobilen Endgerät Codewortdaten zu empfangen und in Abhängigkeit von den empfangenen Codewortdaten die Transpondereinheit zu aktivieren. Es ist damit möglich, den Funkschlüssel zu sperren und das Nutzen des Funkschlüssels zum Authentifizieren eines Benutzers gegenüber einem Türentriegelungssystem oder einer Antriebsstarteinrichtung nur dann zu ermöglichen, wenn der Benutzer über das mobile Endgerät ein richtiges Codewort eingibt. Die Steuereinrichtung kann einen integrierten Schaltkreis umfassen, welcher die beschriebenen Funktionalitäten bereitstellt.
Eine bevorzugte Ausführungsform der Erfindung sieht vor, dass die Form des Gehäuses des Funkschlüssels insgesamt einem Formfaktor des Standards für die standardisierte Speicherkarte entspricht. Mit anderen Worten sieht das Gehäuse des Funkschlüssels zumindest beinahe so aus wie eine Speicherkarte. Hierdurch ergibt sich der Vorteil, dass sich die Transpondereinheit vollständig in ein mobiles Endgerät, also beispielsweise ein Smartphone, integrieren lässt. Erfindungsgemäß handelt es sich bei dem Formfaktor um denjenigen, der einer der folgenden Speicherkarten zugrundegelegt ist: Einer SD-Speicherkarte, einer Micro-SD-Speicherkarte, einer Nano-SD-Speicherkarte. Die Formfaktoren für diese Speicherkarten sind von der SD-Association erhältlich und beispielsweise über das Internetportal mit der Internetadresse www.sdcard.org beziehbar. Eine besonders bevorzugte Ausführungsform sieht vor, die Transpondereinheit in ein Micro-SD-Kartengehäuse zu integrieren. Der Funkschlüssel verhält sich dann beim Einstecken in ein mobiles Endgerät insbesondere mechanisch genau wie eine solche Speicherkarte. Im Folgenden wird mit dem Begriff "SD-Speicherkarte" stets Bezug auf alle drei genannten Kartentypen genommen, falls nicht ausdrücklich etwas anderes angegeben ist.

Die Transpondereinheit ist bevorzugt nach einem Nahfeldkommunikations-Standard ausgebildet, insbesondere einem RFID-Standard (RFID - Radio Frequency Identification) und/oder einem NFC-Standard (NFC - Near Field Communication) und/oder einem Bluetooth-Standard. Dann kann der erfindungsgemäße Funkschlüssel wie ein aus dem Stand der Technik bekannter Funkschlüssel mit Fahrzeugen wechselwirken.

Die Transpondereinheit empfängt das Anfragesignal und sendet das Authentifizierungssignal über eine Antenne. Die Antenne der Transpondereinheit kann ebenfalls in das Gehäuse integriert sein.

Ein weiterer Vorteil ergibt sich jedoch, wenn der Funkschlüssel eine außerhalb des Gehäuses angeordnete Antenne aufweist. Indem die Antennenstruktur z.B. als Abgang an dem Gehäuse ausgebildet ist, lässt sich die Übertragungsqualität, insbesondere das Signal-zu-Rausch-Verhältnis, bei der Kommunikation mit einem Fahrzeug verbessern.

Bevorzugt ist die Antenne flexibel ausgestaltet, also insbesondere als sogenanntes Pigtail. Dann lässt sich die Antenne an ein Gehäuse des mobilen Endgeräts anschmiegen, so dass sie nicht absteht und versehentlich vom Benutzer des mobilen Endgeräts abgeknickt wird.

Ein weiterer Vorteil ergibt sich, wenn die Antenne an einem flexiblen Trägerteil, insbesondere einer Folie, bevorzugt einer Flexfolie, angeordnet ist. Ein solches Trägerteil stabilisiert die Form der Antenne. Zudem lässt sich die Antenne über das Trägeteil einfacher an dem mobilen Endgerät befestigen, beispielsweise ankleben. Die Verwendung einer Flexfolie erlaubt es zudem, die Leiterbahnen, welche die Antennenstruktur bilden, sehr kostengünstig herzustellen.

Es kann auch vorgesehen sein, dass die Transpondereinheit dazu ausgelegt ist, das Authentifizierungssignal über eine Antenne des mobilen Endgeräts auszusenden.

Der in dem Funkschlüssel gespeicherte Authentifizierungscode umfasst gemäß einer vorteilhaften Ausführungsform einen für den Funkschlüssel individuell vergebenen Identifizierungswert. Für den Fall, dass der Benutzer den Funkschlüssel verliert, kann der Funkschlüssel gezielt gesperrt werden, indem der Identifizierungswerts im Fahrzeug aus demjenigen Speicher gelöscht wird, in welchem die zugelassenen Funkschlüssel aufgelistet sind. Der Identifizierungswert kann beispielsweise eine spezifische Transponder-ID der Transpondereinheit sein, eine Seriennummer des Funkschlüssels oder eine Teilenummer des Funkschlüssels, wie sie vom Fahrzeughersteller vergeben werden kann.
Ein weiterer Vorteil ergibt sich, wenn der Funkschlüssel einen von außen zugänglichen Stromversorgungsanschluss zum Empfangen einer Versorgungsspannung von dem mobilen Endgerät aufweist. Dann kann der Funkschlüssel über das mobile Endgerät mit elektrischer Energie versorgt werden. Der Funkschlüssel braucht dann keine eigene Batterie. Hierdurch kann in vorteilhafter Weise die bei herkömmlichen Funkschlüsseln nötige Notstartfunktion entfallen, die nötig ist, wenn bei einem herkömmlichen Funkschlüssel dessen Batterie leer ist. Der erfindungsgemäße Funkschlüssel lässt sich somit auch mit geringerem Schaltungsaufwand und damit kostengünstiger Herstellen.
Der Stromversorgungsanschluss ist bevorzugt gemäß dem Standard für die Speicherkarte ausgestaltet, so dass auf Seiten des mobilen Endgeräts keinerlei konstruktive Veränderung zum Versorgen des Funkschlüssels mit elektrischer Energie nötig ist.
So sieht eine vorteilhafte Weiterbildung vor, dass der Funkschlüssel ebenfalls einen Speicher aufweist, der mit der Kommunikationsschnittstelle gekoppelt ist. Der Funkschlüssel kann sich dann gegenüber dem mobilen Endgerät genauso verhalten wie eine herkömmliche Speicherkarte. Der Funkschlüssel kann dann also in vorteilhafter Weise in derselben Weise durch ein mobiles Endgerät genutzt werden, wie eine herkömmliche Speicherkarte, nämlich als Zusatzspeicher.

Um von einem mobilen Endgerät aus Codewortdaten des mobilen Endgeräts zum Funkschlüssel hin übertragen zu können, ist eine entsprechende Anwendung, also beispielsweise eine sogenannte "App", auf dem mobilen Endgerät zu installieren und auszuführen. In diesem Zusammenhang kann ein Computerprogrammprodukt mit einem auf zumindest einem Speichermedium gespeicherten Programmcode vorgesehen sein, welcher Programmcode entsprechend dazu ausgelegt ist, bei Ausführung durch eine Prozessoreinheit eines mobilen Endgeräts an einen in einem Speicherschacht des mobilen Endgeräts eingesteckten erfindungsgemäßen Funkschlüssel Daten zu übertragen. Bei den Daten handelt es sich dann entweder um Codewortdaten, die aus einem Codewort erzeugt werden, das von einem Benutzer des mobilen Endgeräts abgefragt wird.

In diesem Zusammenhang ist vorgesehen, dass als die Identifikationsdaten des mobilen Endgeräts zumindest einer aus den folgenden Werten ausgelesen wird: Eine IMEI-Seriennummer (IMEI - International Mobile Equipment Identity), eine WLAN-MAC-Adresse (WLAN - Wireless Local Area Network; MAC - Media Access Control), eine Bluetooth-MAC-Adresse. Diese Werte weisen den Vorteil auf, dass sie in der Regel in einem Endgerät verfügbar und dabei für jedes mobile Endgerät individuell vergeben sind, so dass ohne aufwändige Zusatzmaßnahmen bereits eine eindeutige Identifikation des mobilen Endgeräts möglich ist.

Im Folgenden wird die Erfindung noch einmal genauer anhand von konkreten Ausführungsbeispielen beschrieben. Es zeigt:
- Fig. 1: eine schematische Darstellung eines mobilen Endgeräts mit einer darin eingesteckten bevorzugten Ausführungsform des erfindungsgemäßen Funkschlüssels, welcher mit einem Fahrzeug kommuniziert, und
- Fig. 2: eine weitere bevorzugte Ausführungsform des erfindungsgemäßen Funkschlüssels.

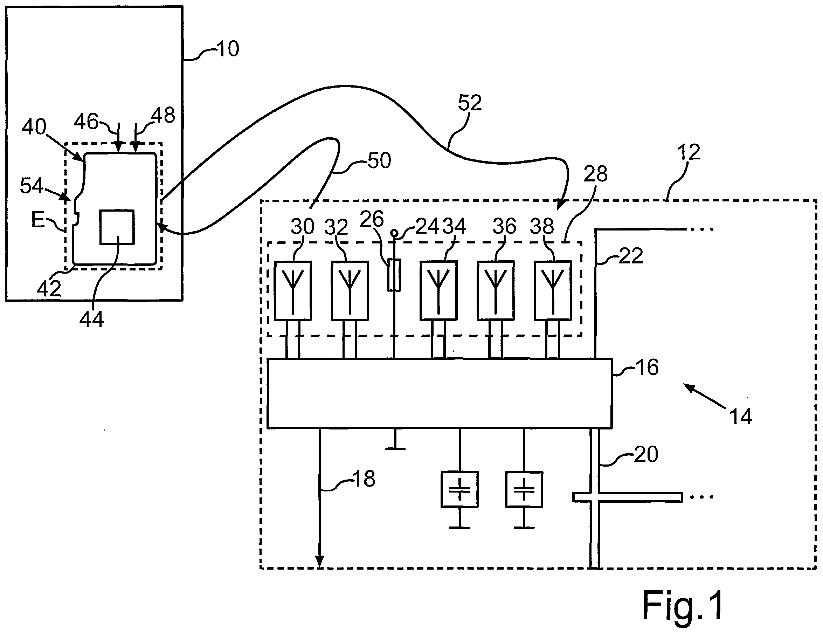

In Fig. 1 sind ein mobiles Endgerät 10 und ein Fahrzeug 12 gezeigt. Bei dem mobilen Endgerät 10 handelt es sich um ein Smartphone. Bei dem Fahrzeug 12 handelt es sich beispielsweise um einen Kraftwagen, insbesondere einen Personenkraftwagen.

Das Fahrzeug 12 weist ein Authentifizierungssystem 14 für den schlüssellosen Zugang zum Fahrzeug 12 und für den schlüssellosen Start desselben auf. Ein solches Identifizierungssystem ist beispielsweise von dem Unternehmen Audi unter dem Produktnamen "Komfortschlüssel" oder "Kessy" bekannt. Es kann auch vorgesehen sein, dass nur eine der beiden Funktionen (Zugang oder Start) realisiert ist. Mit "schlüssellos" ist hierbei gemeint, dass kein beispielsweise aus Metall gefertigter Schlüssel in ein Schloss des Fahrzeugs gesteckt werden muss, um einerseits eine Fahrzeugtür zu entriegeln und andererseits den Starter des Motors des Fahrzeugs 12 aktivieren zu können.
Das Authentifizierungssystem 14 umfasst ein Steuergerät 16 für die Zugangs- und Startberechtigungsüberprüfung. Bei erfolgreicher Authentifizierung eines Benutzers des Fahrzeugs 12 kann durch das Steuergerät 16 über eine Aufweckleitung 18, einen Kommunikationsbus 20, beispielsweise einen CAN-Bus (CAN - Controller Area Network), und zwei weitere Steuerleitungen 22, 24 ein entsprechendes Freigabesignal für die Türentriegelung bzw. den Motorstart ausgesendet werden. Die Steuerleitung 22 führt zu einer Klemme des Fahrzeugs, die Steuerleitung 24 zu einer weiteren Klemme des Fahrzeugs, wobei die Steuerleitung 24 über eine elektrische Sicherung 26, beispielsweise eine Schmelzsicherung, gesichert sein kann. Über den Kommunikationsbus 20 kann das Steuergerät 16 Komfortgeräte des Fahrzeugs 12, beispielsweise eine Klimaanlage, steuern.

Um Zutritt zu dem Fahrzeug 12 zu gelangen, muss ein (nicht dargestellter) Benutzer des Fahrzeugs 12 einen Funkschlüssel bei sich tragen, welcher beispielsweise einen RFID-Transponder enthalten kann. Das Authentifizierungssystem 14 kann mit einem solchen RFID-Transponder über eine Antennenanordnung 28 aus hier fünf Antennen 30, 32, 34, 36, 38 kommunizieren. Mittels der Antennenanordnung 28 ist es dem Steuergerät möglich, den RFID-Transponder auch zu orten und hierdurch zu unterscheiden, ob sich der RFID-Transponder außerhalb des Fahrzeugs 12 oder innerhalb desselben befindet. Befindet sich der RFID-Transponder außerhalb des Fahrzeugs 12, so wird nur die Fahrzeugtürentriegelung durch ein entsprechendes Signal über eine der Leitungen 18, 22, 24 bzw. den Kommunikationsbus 20 freigegeben, d.h. der Benutzer kann beispielsweise durch Betätigen eines Türgriffs die Türentriegelung auslösen. Das Steuergerät 16 erzeugt nur dann auch ein Freigabesignal über eine der Leitungen 18, 22, 24 bzw. den Kommunikationsbus 20, um den Start des Motors des Fahrzeugs 12 freizugeben, wenn der RFID-Transponder in einem Fahrzeuginnenraum des Fahrzeugs 12 geortet wird.
Für die Freigabe muss der Benutzer des Fahrzeugs 12 in dem gezeigten Beispiel keinen separaten Funkschlüssel z.B. in Form eines Schlüsselanhängers oder dergleichen mit sich führen. Es reicht aus, dass der Benutzer sein mobiles Endgerät 10 mit sich führt. In dem mobilen Endgerät 10 befindet sich ein integrierter Funkschlüssel 40, der für die Authentifizierung gegenüber dem Authentifizierungssystem 14 ausreicht. Der Funkschlüssel 40 ist in einen Einschubschacht E des mobilen Endgeräts 10 eingeschoben. Der Einschubschacht E ist vom Hersteller des mobilen Endgeräts eigentlich dafür vorgesehen, eine Speicherkarte, beispielsweise eine SD-Speicherkarte, mit dem mobilen Endgerät 10 zu verbinden. Bei dem Einschubschacht handelt es sich um einen solchen für eine Speicherkarte gemäß dem Standard für einer SD-Karte, eine Micro-SD-Karte oder eine Nano-SD-Karte. Der Funkschlüssel 40 weist entsprechend ein Gehäuse 42 mit einem Formfaktor einer entsprechenden Speicherkarte auf, wie sie bestimmungsgemäß in den Einschubschacht des mobilen Endgeräts 10 passt und dort bestimmungsgemäß verriegelt werden kann.
In dem Gehäuse 42 befindet sich eine Transponderelektronik 44, die in ihrer Funktionsweise einer Transponderelektronik eines herkömmlichen Funkschlüssels entspricht. Die Transponderelektronik 44 stellt eine Transpondereinheit im Sinne der Erfindung dar. Ein herkömmlicher Funkschlüssel unterscheidet sich von dem Funkschlüssel 40 nur darin, dass er in einem in der Regel weitaus größeren Gehäuse angeordnet ist, so dass der Funkschlüssel als separates Gerät neben dem mobilen Endgerät 10 mitzuführen wäre.
In dem Einschubschacht befinden sich ein Spannungsversorgungsanschluss 46 und ein Kommunikationsanschluss 48. Mittels der Anschlüssen 46, 48 ist das mobile Endgerät in der Lage, für den Fall, dass sich in dem Einschubschacht eine herkömmliche Speicherkarte befindet, Speicher- und Steuerdaten mit dieser Speicherkarte auszutauschen. Der Funkschlüssel 40 kann dazu ausgelegt sein, ebenfalls die Versorgungsspannung von dem Spannungsversorgungsanschluss 46 abzugreifen und hiermit die Transponderelektronik 44 zu betreiben. Das Gehäuse 42 weist dann entsprechend einen von außen zugänglichen Spannungsversorgungsanschluss auf, welcher den Spannungsversorgungsanschluss 46 berührt, wenn der Funkschlüssel 40 in den Einschubschacht E eingesteckt ist. Erfindungsgemäß ist vorgesehen, dass der Funkschlüssel 40 eine Kommunikationsschnittstelle aufweist, die im eingesteckten Zustand des Funkschlüssels 40 den Kommunikationsanschluss 48 berührt, so dass auch Daten zwischen dem Funkschlüssel 40 und dem mobilen Endgerät 10 ausgetauscht werden können.
Während der Benutzer mit seinem mobilen Endgerät 10 am Fahrzeug 12 steht und z.B. einen (nicht dargestellten) Türgriff des Fahrzeugs 12 betätigt, sendet das Authentifizierungssystem 14 über die Antennenanordnung 28 ein Anfragesignal 50 aus, das von einer in dem Gehäuse 42 angeordneten Antenne empfangen wird und von der Transponderelektronik 44 in an sich bekannter Weise verarbeitet wird. Die Transponderelektronik 44 erzeugt entsprechend in Reaktion auf das Anfragesignal 50 ein Authentifizierungssignal 52, das sie über die Antenne des Funkschlüssels 40 aussendet. Das Authentifizierungssignal 52 kann beispielsweise eine Transponder-ID umfassen, welche den Funkschlüssel 40 eindeutig identifiziert. Über die Antennenanordnung 28 empfängt das Authentifizierungssystem 14 das Authentifizierungssignal 52 und verarbeitet es mittels des Steuergeräts 16 in an sich bekannter Weise. Mit anderen Worten kann der Funkschlüssel 40 von außerhalb des mobilen Endgeräts 10 nicht von einem herkömmlichen Funkschlüssel unterschieden werden. Damit ist der Funkschlüssel 40 vollständig kompatibel mit den herkömmlichen schlüssellosen Zugangssystemen von Fahrzeugen.

Die Form des Gehäuses 42 muss nicht exakt derjenigen einer Speicherkarte entsprechen, wie sie für den Einschubschacht des mobilen Endgeräts 10 vorgesehen sind. Beispielsweise kann das Gehäuse 42 auch ein wenig aus dem Speicherschacht herausstehen, ohne dass hierdurch die Funktionalität des mobilen Endgeräts 10 oder des Funkschlüssels 40 beeinträchtigt würde. Um den Funkschlüssel 40 sicher in dem Speicherschacht zu halten, sollte zumindest derjenige Bereich 54 der Form einer Speicherkarte entsprechend, welcher zum Verankern oder Verriegeln des Gehäuses 42 in dem Speicherfach gemäß dem entsprechenden Standard für die Speicherkarten nötig ist.

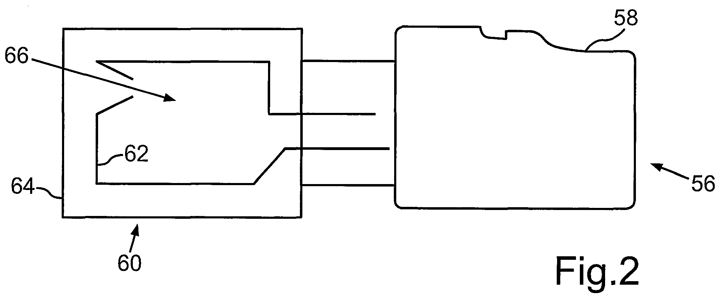

In Fig. 2 ist ein Funkschlüssel 56 gezeigt, welcher ebenfalls in einem Einschubschacht eines mobilen Endgeräts eingeschoben und dort von einem Verriegelungsmechanismus des Einschubschachtes gehalten werden kann. Ein Gehäuse 58 des Funkschlüssels 56 weist dazu gemäß dem Prinzip der Erfindung die Form einer entsprechenden Speicherkarte auf, welche mit der Form des Speicherschachtes korrespondiert. Bei dem Funkschlüssel 56 ist an dem Gehäuse 58 ein Abgang 60 befestigt, welcher eine Antennenstruktur 62 aufweist, die auf einer flexiblen Folie 64, beispielsweise einer Pigtail-Flexfolie, befestigt ist. Bei dem Gehäuse 58 kann es sich beispielsweise um ein Gehäuse gemäß dem Formfaktor für eine Micro-SD-Karte handeln.

Durch die ausgelagerte Antennenstruktur 62 ist es möglich, eine ausreichend große Fläche 66 für das Aussenden und Empfangen von Signalen mittels der RFID-Technik bereitzustellen. Indem die Antennenstruktur 62 und die Trägerfolie 64 flexibel ausgestaltet sind, lassen sie sich im eingesteckten Zustand des Gehäuses 58 beispielsweise umbiegen und an einem Gehäuse eines mobilen Endgeräts, beispielsweise einem Deckel für ein Akkumulatorfach, befestigen. Die Trägerfolie 64 kann hierzu beispielsweise eine vorbereitete Klebefläche aufweisen.

Durch das Beispiel ist gezeigt, wie eine Funkschlüssel-Elektronik miniaturisiert beispielsweise auf einer Micro-SD-Karte integriert werden kann. Die Micro-SD-Karte kann dann in einem Smartphone betrieben werden. Ein Benutzer eines Fahrzeugs muss dann nicht zwei Gegenstände mit sich herumtragen, die er beispielsweise aufgrund ihres Werts nicht verlieren sollte, nämlich den Funkschlüssel und das Smartphone. Die Funktion des Funkschlüssels kann sowohl zum Fahrzeug-Öffnen als auch zur Startfreigabe ausgelegt sein und lässt sich problemlos in ein Smartphone integrieren. Dabei lassen sich alle sicherheits- und prozessrelevanten Vorschriften berücksichtigen. So wird die komplette Berechtigungselektronik, also die Transpondereinheit, autark betrieben, so dass keine Kommunikation von Berechtigungsdaten zu einem Smartphone hin erfolgt. Der integrierte Funkschlüssel erhält wie ein gewöhnlicher Funkschlüssel eine eigene Transponder-ID, Serien- und Teilenummer, so dass er als ein weiteres Zusatzteil für Fahrzeuge behandeln werden kann, ohne dass hierzu die Logistik umgestellt werden müsste. Ein großer Vorteil ist, dass die Spannungsversorgung für den Funkschlüssel durch das Smartphone erfolgen kann, so dass keine eigene Batterie bereitgestellt werden kann und auch das Aufladen der Batterie mittels herkömmlichen Aufladegeräten für Smartphones möglich ist.
Optional kann eine PIN-Anfrage über das Smartphone erfolgen und so die Freigabe der berechtigten Funktion des Funkschlüssels in Abhängigkeit von einem Passwort oder einem PIN gesteuert werden. Hierzu kann eine entsprechende Applikation (App) für das Smartphone bereitgestellt werden. Die Berechtigungsfunktion kann auch an spezifische Smartphonedaten gekoppelt werden, wie etwa die IMEI-Seriennummer, eine WLAN-/Bluetooth-MAC-Adresse und andere, ein spezifisches Smartphone eindeutig identifizierende Daten. Es kann auch vorgesehen sein, einen Flashdatenspeicher in den Funkschlüssel zu integrieren, so dass der Funkschlüssel wie eine herkömmliche Speicherkarte zur Erweiterung des internen Smartphonespeichers genutzt werden kann. Ein solcher Flashdatenspeicher ermöglicht es weiterhin, die Berechtigungselektronik autark zu betreiben. Indem der Funkschlüssel durch ein Smartphone mit Spannung versorgt werden kann, entfällt auch die sogenannte Notstartfunktion herkömmlicher Funkschlüssel, die es erfordert, dass der Funkschlüssel über eine Transponderspule mit Energie versorgt werden kann, um bei leerer Batterie des Funkschlüssels immer noch einen Zugang zum Fahrzeug zu ermöglichen. Für den Fall, dass Smartphones keine von außen zugängliche Einschubschachte für Speicherkarten vorsehen, kann mit den Herstellern solcher Modelle von Smartphones auch vereinbart werden, dass entsprechende Funkschlüssel mit der Form einer Speicherkarte für solche Modelle als Setzteil hergestellt und dem Hersteller der Smartphones zur Verfügung gestellt werden, damit dieser sie bei der Herstellung in die entsprechenden Smartphones einbaut.
Ein in einem Gehäuse für eine Speicherkarte integrierter Funkschlüssel kann in einfacher Weise auf die Verwendung mit einem bestimmten Fahrzeug eingestellt werden. Der Funkschlüssel wird dazu in ein mobiles Endgerät in den entsprechenden Einschubschacht eingeschoben und das Fahrzeug in einen Anlernmodus geschaltet, in welchem es beispielsweise die Transponder-ID oder eine andere Identifizierungsnummer des Funkschlüssels von diesem empfängt und (gegebenenfalls nach entsprechender Rückfrage beim Nutzer des Fahrzeugs) als einen autorisierten Funkschlüssel in einem entsprechenden Speicher des Fahrzeugs abspeichert. Von nun an kann der Funkschlüssel zum Autorisieren des Zugangs bzw. des Fahrzeugstarts verwendet werden. Sollte ein Benutzer den Funkschlüssel verlieren, ist es entsprechend einfach, das Fahrzeug zu sichern. Hierzu muss dann einfach die Identifikationsnummer wieder aus dem Speicher des Fahrzeugs gelöscht werden. Der Funkschlüssel wird dann sozusagen wieder vom Fahrzeug abgemeldet. Genauso kann der Funkschlüssel auch beim Verkauf des Fahrzeugs an den neuen Besitzer einfach weitergegeben werden. Da Speicherkarten in der Regel ohne Aufwand wieder aus einem mobilen Endgerät entfernt werden können, ist dies dann auch entsprechend für den Funkschlüssel möglich. Genauso können auch mehrere Funkschlüssel in Form einer Speicherkarte bei einem Fahrzeug angelernt werden, so dass mehrere Personen mit ihren mobilen Endgeräten Zutritt zum Fahrzeug erhalten können. Die Funkschlüssel in Form von Speicherkarten lassen sich auch zusammen mit herkömmlichen Funkschlüsseln nebeneinander verwenden. Die Fahrzeugelektronik muss für die Verwendung der erfindungsgemäßen Funkschlüssel ja in keiner Weise angepasst werden.
Für die Spannungsversorgung und gegebenenfalls für die Kommunikation (beispielsweise zur PIN-Eingabe) kann der erfindungsgemäße Funkschlüssel die standardisierte Schnittstelle für Speicherkarten, also SD-Karten, nutzen. Hierdurch ist der Funkschlüssel unabhängig von dem auf dem mobilen Endgerät installierten Betriebssystem und den auf dem mobilen Endgerät laufenden Anwenderprogrammen.

## Patentansprüche

1. Funkschlüssel (40, 56) zum Authentifizieren eines Benutzers eines Fahrzeugs (12) gegenüber einem Türentriegelungssystem (14) des Fahrzeugs (12) und/oder einer Antriebsstarteinrichtung (14) des Fahrzeugs (10), umfassend:
- ein Gehäuse (42, 58), in welchem eine Transpondereinheit (44) angeordnet ist,
- wobei die Transpondereinheit (44) dazu ausgelegt ist, ein von dem Fahrzeug (12) drahtlos ausgesendetes Anfragesignal (50) zu empfangen und in Reaktion auf das empfangene Anfragesignal (50) ein Authentifizierungssignal (52) auf der Grundlage eines Authentifizierungscodes über eine Antenne (62) des Funkschlüssels (40, 56) auszusenden, wobei
die Transpondereinheit (44) hierzu ein System aus einer Empfängerelektronik für das Anfragesignal, einer Senderelektronik für das Authentifizierungssignal (52) und einer Berechtigungselektronik ist und die Berechtigungselektronik einen Prozessor zum Verarbeiten des Anfragesignals und zum Erzeugen des Authentifizierungssignals (52) und einen Speicherelement für den Authentifizierungscode umfasst,
- wobei ein Bereich (54) des Gehäuses (42) eine Form eines Einsteckbereichs einer standardisierten Speicherkarte für ein Smartphone (10) aufweist, über welchen die Speicherkarte standardgemäß in einem Einsteckschacht (E) des Smartphones (10) zu befestigen ist, wobei der Form ein Formfaktor einer der folgenden Speicherkarten zugrunde gelegt ist: einer SD-Speicherkarte, einer Micro-SD-Speicherkarte, einer Nano-SD-Speicherkarte,
- wobei die Transpondereinheit (44) dazu ausgelegt ist, eine drahtgebundene Datenkommunikation mit dem Smartphone (10) nur unidirektional zur Transpondereinheit (44) hin durchzuführen, so dass es nicht möglich ist, von dem Smartphone (10) aus, in welchem der Funkschlüssel (40, 56) steckt, den Authentifizierungscode auszulesen, und
- wobei das Gehäuse des Funkschlüssels (40, 56) eine Kommunikationsschnittstelle gemäß einem Standard für eine Kommunikationsschnittstelle für die Speicherkarte und eine Steuereinrichtung aufweist, welche Steuereinrichtung dazu ausgelegt ist, über die Kommunikationsschnittstelle von dem Smartphone (10) Codewortdaten zu empfangen und in Abhängigkeit von den empfangenen Codewortdaten die Transpondereinheit (44) zu aktivieren, wodurch es ermöglicht ist, den Funkschlüssel (40, 56) zu sperren und das Nutzen des Funkschlüssels (40, 56) zum Authentifizieren eines Benutzers gegenüber dem Türentriegelungssystem (14) oder der Antriebsstarteinrichtung (14) nur dann zu ermöglichen, wenn der Benutzer über das Smartphone (10) ein richtiges Codewort eingibt.

2. Funkschlüssel (40, 56) nach Anspruch 1, wobei die Form des Gehäuses (42, 58) insgesamt einem Formfaktor des Standards für die standardisierte Speicherkarte entspricht.

3. Funkschlüssel (40, 56) nach einem der vorhergehenden Ansprüche, wobei die Transpondereinheit (44) nach einem Nahfeldkommunikations-Standard, insbesondere einem RFID-Standard und/oder einem NFC-Standard und/oder einem Bluetooth-Standard, ausgebildet ist.

4. Funkschlüssel (56) nach einem der vorhergehenden Ansprüche, wobei der Funkschlüssel (56) als Antenne (62) eine außerhalb des Gehäuses (58) angeordnete Antenne (62) aufweist.

5. Funkschlüssel (56) nach Anspruch 4, wobei die Antenne (62) flexibel ausgestaltet ist.

6. Funkschlüssel (56) nach Anspruch 4 oder 5, wobei die Antenne (62) an einem flexiblen Trägerteil (64), insbesondere einer Folie, bevorzugt einer Flexfolie, angeordnet ist.

7. Funkschlüssel (40, 56) nach einem der vorhergehenden Ansprüche, wobei der Authentifizierungscode einen für den Funkschlüssel (40, 56) individuell vergebenen Identifizierungswert umfasst, insbesondere eine für die Transpondereinheit spezifische Transponder-ID, eine Seriennummer des Funkschlüssels oder eine Teilenummer des Funkschlüssels.

8. Funkschlüssel (40, 56) nach einem der vorhergehenden Ansprüche, wobei das Gehäuse des Funkschlüssels (40, 56) einen von außen zugänglichen Stromversorgungsanschluss zum Empfangen einer Versorgungsspannung (46) von dem Smartphone (10) aufweist.

9. Funkschlüssel (40, 56) nach einem der vorhergehenden Ansprüche, wobei ein Speicher in dem Gehäuse (42, 58) angeordnet ist, der mit der Kommunikationsschnittstelle gekoppelt ist.

## Claims

1. Radio key (40, 56) to authenticate a user of a vehicle (12) with respect to a door unlocking system (14) of the vehicle (12) and/or a drive starting device (14) of the vehicle (10), comprising:
- a housing (42, 58) in which is disposed a transponder unit (44),
- wherein the transponder unit (44) is designed to receive a request signal (50) transmitted wirelessly from the vehicle (12) and in reaction to the received request signal (50) to emit an authentication signal (52) based on an authentication code via an antenna (62) of the radio key (40, 56), wherein the transponder unit (44) to this end is a system encompassing a receiving electronic for the request signal, a sender electronic for the authentication signal (52) and an authorisation electronic, and the authorisation electronic comprises a processor for processing the request signal and for generating the authentication signal (52) and a storage element for the authentication code,
- wherein a region (54) of the housing (42) has a form of an insertion area of a standardised memory card for a smart phone (10) by means of which the memory card can be fixed in standardised manner in an insertion slot (E) of the smart phone (10), wherein the form is based on a form factor of one of the following memory cards: an SD-memory card, a micro-SD-memory card, a nano-SD memory card,
- wherein the transponder unit (44) is designed to carry out a cabled data communication with the smart phone (10) only unidirectionally to the transponder unit (44), so that it is not possible to read the authentication code from the smart phone (10) in which the radio key (40, 56) is inserted, and
- wherein the housing of the radio key (40, 56) has a communication interface according to a standard for a communication interface for the memory card and a control device, which control device is designed to receive via the communication interface from the smart phone (10) codeword data and depending on the received codeword data to activate the transponder unit (44), whereby it is made possible to lock the radio key (40, 56) and only then to enable the use of the radio key (40, 56) for authenticating a user with respect to the door unlocking system (14) or the drive starting device (14), when the user inputs a correct codeword using the smart phone (10).

2. Radio key (40, 56) according to claim 1, wherein the form of the housing (42, 58) in total corresponds to a form factor of the standard for the standardised memory card.

3. Radio key (40, 56) according to one of the preceding claims, wherein the transponder unit (44) is designed according to a near field communication standard, in particular an RFID standard and/or a NFC standard and/or a Bluetooth standard.

4. Radio key (56) according to one of the preceding claims, wherein the radio key (56) as antenna (62) has an antenna (62) disposed externally to the housing (58).

5. Radio key (56) according to claim 4, wherein the antenna (62) is flexibly designed.

6. Radio key (56) according to claim 4 or 5, wherein the antenna (62) is disposed at a flexible support part (64), in particular a film, preferably a flexible film.

7. Radio key (40, 56) according to one of the preceding claims, wherein the authentication code comprises an individually assigned identification value for the radio key (40, 56), in particular a transponder ID specific to the transponder unit, a serial number of the radio key or a part number of the radio key.

8. Radio key (40, 56) according to one of the preceding claims, wherein the housing of the radio key (40, 56) has an externally accessible power supply terminal for receiving a supply voltage (46) from the smart phone (10).

9. Radio key (40, 56) according to one of the preceding claims, wherein in the housing (42, 58) is disposed a memory which is coupled with the communication interface.

## Revendications

1. Clé électronique (40, 56) destinée à l'authentification d'un utilisateur d'un véhicule (12) vis-à-vis d'un système de déverrouillage de portes (14) du véhicule (12) et/ou d'un dispositif de démarrage de moteur (14) du véhicule (10), comprenant :
- un boîtier (42, 58) dans lequel est placé un transpondeur (44),
- lequel transpondeur (44) est conçu pour recevoir un signal d'interrogation (50) émis sans fil par le véhicule (12) et pour émettre en réaction au signal d'interrogation (50) reçu un signal d'authentification (52) sur la base d'un code d'authentification par l'intermédiaire d'une antenne (62) de la clé électronique (40, 56), lequel transpondeur (44) est à cet effet un système constitué d'une électronique de récepteur pour le signal d'interrogation, d'une électronique d'émetteur pour le signal d'authentification (52) et d'une électronique d'autorisation et laquelle électronique d'autorisation comprend un processeur destiné à traiter le signal d'interrogation et à produire le signal d'authentification (52) ainsi qu'un élément de mémorisation destiné au code d'authentification,
- dans laquelle une zone (54) du boîtier (42) a une forme d'une zone d'insertion d'une carte mémoire standardisée pour un smartphone (10), zone par l'intermédiaire de laquelle la carte mémoire doit être fixée normalement dans un compartiment d'insertion (E) du smartphone (10), un facteur de forme d'une des cartes mémoires suivantes étant à la base de la forme : carte mémoire SD, carte mémoire micro-SD, carte mémoire nano-SD,
- dans laquelle le transpondeur (44) est conçu pour réaliser une communication de données filaire avec le smartphone (10) seulement de manière unidirectionnelle en direction du transpondeur (44) de telle sorte qu'il est impossible de lire le code d'authentification à partir du smartphone (10) dans lequel se trouve la clé électronique (40, 56), et
- dans laquelle le boîtier de la clé électronique (40, 56) comporte une interface de communication selon un standard pour une interface de communication destinée à la carte mémoire et un dispositif de commande, lequel dispositif de commande est conçu pour recevoir des données de mot de code en provenance du smartphone (10) par l'intermédiaire de l'interface de communication et pour activer le transpondeur (44) en fonction des données de mode de code reçues, ce qui permet de bloquer la clé électronique (40, 56) et de ne permettre l'utilisation de la clé électronique (40, 56) pour l'authentification d'un utilisateur vis-à-vis du système de déverrouillage de portes (14) ou pour du dispositif de démarrage de moteur (14) que si l'utilisateur entre un mot de code correct par l'intermédiaire du smartphone (10).

2. Clé électronique (40, 56) selon la revendication 1, dans laquelle la forme du boîtier (42, 58) correspond globalement à un facteur de forme du standard pour la carte mémoire standardisée.

3. Clé électronique (40, 56) selon l'une quelconque des revendications précédentes, dans laquelle le transpondeur (44) est conçu selon un standard de communication en champ proche, en particulier un standard RFID et/ou un standard NFC et/ou un standard Bluetooth.

4. Clé électronique (56) selon l'une quelconque des revendications précédentes, dans laquelle la clé électronique (56) comporte comme antenne (62) une antenne (62) agencée à l'extérieur du boîtier (58).

5. Clé électronique (56) selon la revendication 4, dans laquelle l'antenne (62) est flexible.

6. Clé électronique (56) selon la revendication 4 ou 5, dans laquelle l'antenne (62) est agencée au niveau d'une partie de support flexible (64), en particulier d'une feuille, de préférence d'une feuille de transfert.

7. Clé électronique (40, 56) selon l'une quelconque des revendications précédentes, dans laquelle le code d'authentification comprend une valeur d'identification attribuée individuellement pour la clé électronique (40, 56), en particulier un identificateur de transpondeur spécifique au transpondeur, un numéro de série de la clé électronique ou une référence de pièce de la clé électronique.

8. Clé électronique (40, 56) selon l'une quelconque des revendications précédentes, dans laquelle le boîtier de la clé électronique (40, 56) comporte un raccordement d'alimentation en courant accessible de l'extérieur et destiné à recevoir une tension d'alimentation (46) en provenance du smartphone (10).

9. Clé électronique (40, 56) selon l'une quelconque des revendications précédentes, dans laquelle une mémoire est agencée dans le boîtier (42, 58), laquelle mémoire est couplée à l'interface de communication.
